# EUROPÄISCHE PATENTANMELDUNG

(11) **EP 0 904 839 A2**
(43) Veröffentlichungstag der Anmeldung: **31.03.1999**
(21) Anmeldenummer: 98113958.7
(22) Anmeldetag: 25.07.1998
(51) Int. Cl.: B01J 37/20, B01J 27/047, C10G 49/04

(54) **Verfahren zur Herstellung sulfidierter Katalysatoren**

(30) Priorität: 30.09.1997 DE 19743161
(71) Anmelder: KataLeuna GmbH Catalysts, 06236 Leuna (DE)
(72) Erfinder: John, Hans-Heino, Dr., 06120 Halle/S (DE); Birke, Peter, Prof. Dr., 06179 Langenbogen (DE); Bisinger, Hans-Joachim, Dr., 06231 Kötzschau (DE); Schödel, Rainer, Dr., 06122 Halle/S (DE)
(74) Vertreter: Schrell, Andreas, Dr.

(57) **Zusammenfassung**

Die Erfindung betrifft stabilisierte und sulfidierte Katalysatoren, enthaltend ein oder mehrere Sulfide von einem oder mehreren Metallen der Nebengruppe VI und/oder VIII des Periodensystems und einen porösen Träger, wobei der Katalysator einen Sauerstoffgehalt von 0,5 bis 0,20 mol pro Grammatom Metall aufweist.

## Beschreibung

Die Erfindung betrifft stabilisierte und sulfidierte Katalysatoren, umfassend Metalle der VI. und/oder der VIII. Nebengruppe des Periodensystems der Elemente (PSE), kombiniert mit einem Träger, die zum Einbau in einen Reaktor ohne nachfolgend notwendige Schwefelung geeignet sind und ein Verfahren zu deren Herstellung.

Hydrier-, Hydroraffinations- und Hydrocrackkatalysatoren, die Verbindungen mit Metallen der VI. und der VIII. Nebengruppe enthalten, arbeiten nur dann stabil in Gegenwart von Schwefelverbindungen im zu hydrierenden Rohstoff, wenn die Schwermetallverbindungen als sulfidische Aktivphasen vorliegen. Bekannt ist seit langem die Herstellung der Sulfidformen der Schwermetallverbindungen, indem man zum Beispiel vom Ammoniumthiowolframat ausging und die notwendigen Substanzen miteinander mischte und formte, oder die geformten Katalysatoren in einer Schwefelwasserstoffatmosphäre behandelte. Dabei entstanden die aktiven Sulfidverbindungen. Allerdings waren diese Katalysatoren sehr empfindlich an der Luft. Sie veränderten sich und verloren einen Teil ihrer Leistungsfähigkeit, die durch eine nachträgliche Reduzierung und Schwefelung nicht wieder ausgeglichen werden kann. Um zu vermeiden, daß die Katalysatoren nach der Bildung der aktiven Schwermetallsulfide mit Luftsauerstoff in Berührung kommen, wurden Vorschriften zur in-situ-Schwefelung entwickelt (E. Münzing, H. Blume, E. Pindur, Zeitschrift für Chemie, 2 (1962), S. 76-83).

Zur Verkürzung beziehungsweise Vermeidung dieses aufwendigen Vorgangs der in-situ-Schwefelung in der Raffinerie wurde gemäß der EP O 153 233 A vorgeschlagen, die Katalysatoren außerhalb des Reaktors in Abwesenheit von Wasserstoff mit einer wäßrigen Lösung von Ammoniumsulfid zu behandeln und anschließend zu trocknen.

Ein ähnliches Verfahren nach der EP O 181 254 A zur ex-situ-Präsulfidierung wird durchgeführt, indem in die Katalysatoren schwefelhaltige Verbindungen auf der Basis organischer Polysulfide eingeführt werden. Diese Katalysatoren enthalten den Schwefel in adsorbierter Form. Die Hydriermetalle liegen nicht als Sulfide, sondern noch als Oxide vor.

Gemäß der WO 93/02793 werden poröse Katalysatoren, die sulfidierbare Metalle enthalten, geschwefelt, indem sie mit elementarem Schwefel und einem flüssigen olefinischen Kohlenwasserstoff bei Temperaturen oberhalb 150°C in inerter Atmosphäre erwärmt werden. Der Schwefel schmilzt und dringt in die Poren des Katalysators ein. Anschließend werden die mit Schwefel gefüllten Poren durch ein polymerisierbares, langkettiges Alken (Olefin) verschlossen, so daß kein Sauerstoff mehr in die Poren eindringen kann. Die so präsulfidierten Katalysatoren liegen zu einem großen Teil als Oxysulfide vor.

Alle präsulfidierten Katalysatoren werden nach ihrem Einbau in den Reaktor mit einem reduzierenden Gas, vorzugsweise einem wasserstoffhaltigen Gas, und falls erwünscht oder zweckmäßig, auch mit einem flüssigen Kohlenwasserstoff-feed aufgeheizt und dabei formiert, wobei erst jetzt die eigentlichen sulfidischen, hydrieraktiven Schwermetallsulfide gebildet werden. Anschließend wird der Kohlenwasserstoffstrom bei Reaktionstemperaturen an diesen Katalysatoren umgewandelt (M. de Wind, J.J.L. Heinermann, S.L. Lee, F.L. Plantenga, C.C. Johnson, D.C. Woddward, Oil Gas Journal 90 [1992] 8, p. 49-53).

Obwohl die Handhabung der bekannten präsulfidierten Katalysatoren weiter verbessert worden ist (J.G. Welch, P. Poyner, R.F. Skelly, Oil Gas Journal 10.08.1994, S. 56-64), besitzen diese Katalysatoren noch folgende Nachteile:

Sie enthalten den Schwefel überwiegend oder zum Teil in elementarer Form oder in Form von schwefelorganischen Verbindungen oder als Metalloxysulfide. Der Schwefel liegt noch nicht in der endgültigen Metallsulfid-Form vor. Diese Metallsulfid-Form muß sich erst durch die Einwirkung von Wasserstoff bei höherer Temperatur im Reaktor ausbilden.

Beim Umgang mit den bekannten präsulfidierten Katalysatoren gibt es infolge der noch nicht ausgebildeten Struktur eine latente Gefahr der unkontrollierbaren Reaktion der adsorbierten Verbindungen mit den Metallkomponenten unter Selbsterhitzung des Katalysators und zum unkontrollierten Reagieren der selbsterhitzten Katalysatoren an der Luft unter Abbrennen der organischen Anteile und des Schwefels. Die bekannten präsulfidierten Katalysatoren werden daher nur unter besonderen Vorsichtsmaßnahmen transportiert und gelagert. Sie dürfen keiner direkten Sonneneinstrahlung und höherer Temperatur ausgesetzt werden. Zudem müssen sie in kleinen Behältern gelagert werden. Der Einbau dieser Katalysatoren muß ferner in einer inerten Stickstoffatmosphäre vor sich gehen.

Beim Aufheizen der bekannten präsulfidierten Katalysatoren im Reaktor werden auch unerwünschte Kohlenwasserstoffmaterialien frei, die in der Inbetriebnahmephase den Kohlenwasserstoffstrom verunreinigen. Durch die an den bekannten präsulfidierten Katalysatoren unter der Wirkung von Wasserstoff und höherer Temperatur sowie höherem Druck ausgelösten Reaktionen entstehen im Reaktor Temperaturerhöhungen. Durch diese bestehen Gefahren für die Sicherheit der Anlage und für die Qualität des Katalysators. Durch zu schnelles Aufheizen kann ferner der Katalysator in seiner Aktivität und in seiner Festigkeit geschädigt werden.

Die bekannten präsulfidierten Katalysatoren erleiden schließlich häufig Aktivitätsverluste gegenüber der in-situ-Sulfidierung, insbesondere dann, wenn die Reaktoren im "geraden Durchgang" betrieben werden und die sich ablösenden Schwefelverbindungen nicht wieder über den Katalysator geführt werden können.

Das der vorliegenden Erfindung zugrundeliegende technische Problem liegt also darin, gefahrlos zu handhabende sulfidierte und stabilisierte Katalysatoren in einfacher Weise herzustellen, die die vorgenannten Nachteile überwinden.

Die Erfindung löst dieses technische Problem durch die Bereitstellung eines Katalysators gemäß Hauptanspruch. Insbesondere betrifft die Erfindung stabilisierte, sulfidierte Katalysatoren aus mindestens einem Metall der Nebengruppen VI, vorzugsweise VI B, und/oder mindestens einem Metall der Nebengruppe VIII des PSE, die einen Sauerstoffgehalt von 0,05 bis 0,2 mol O₂ pro Grammatom der enthaltenen Metalle in absorbierter Form auf den Metallsulfiden enthalten, wobei dieser Katalysator vorzugsweise mit einem, insbesondere porösen, Träger kombiniert ist.

Im Zusammenhang mit der vorliegenden Erfindung werden unter sulfidierten Katalysatoren metallische Katalysatoren verstanden, deren Metall zumindest teilweise in Form eines Metallsulfids vorliegt.

In einer besonders bevorzugten Ausführung betrifft die Erfindung einen vorgenannten Katalysator, wobei der Träger glühfest ist, insbesondere SiO₂, Al₂O₃, Kieselgur, TiO₂, Ton, Zeolith, ZrO₂ und/oder Silikat enthält.

Die stabilisierten, sulfidierten Katalysatoren werden erzeugt, indem, vorzugsweise oxidische, Vorläuferkatalysatoren aus Metallen der VI. und/oder VIII. Gruppe des PSE mit Schwefelwasserstoff, vorzugsweise einer Schwefelwasserstoff-haltigen Gasmischung, insbesondere einer Mischung aus Wasserstoff und Schwefelwasserstoff, wahlweise verdünnt mit Stickstoff als inertem Transportmittel, bei erhöhten Temperaturen, insbesondere bei Temperaturen von 150 bis 400°C, behandelt und die erzeugten sulfidierten Katalysatoren nachfolgend in einer nichtreaktiven Umgebung abgekühlt werden, insbesondere auf Temperaturen von -20 bis 100°C, wobei gleichzeitig mit der oder nach der Abkühlung die Katalysatoren mit einer Sauerstoff-haltigen Gasmischung in Kontakt gebracht werden und eine Menge von 0,05 bis 0,20 mol O₂ pro Grammatom Metall der Gruppe VI und/oder VIII des PSE unter unmittelbarer Abführung der Absorptionswärme absorbiert wird.

Im Zusammenhang mit der vorliegenden Erfindung wird unter einer Schwefelwasserstoff-haltigen und einer Sauerstoff-haltigen Gasmischung entweder reiner Schwefelwasserstoff beziehungsweise reiner Sauerstoff, vorzugsweise aber Gasgemische verstanden, die neben anderen Gasen Schwefelwasserstoff beziehungsweise Sauerstoff enthalten.

Selbstverständlich kann erfindungsgemäß auch vorgesehen sein, statt der oxidischen Vorläuferkatalysatoren auch sulfidierbare, nicht in oxidischer Form vorliegende Vorläuferkatalysatoren, also reines Metall enthaltende oder aus diesem bestehende Vorläuferkatalysatoren, zu verwenden.

Das Verfahren zur Herstellung der stabilisierten, sulfidierten Katalysatoren wird vorzugsweise durchgeführt, indem eine Schwefelwasserstoff-haltige Gasmischung aus 0,1 bis 20 Vol.-% Schwefelwasserstoff und 1 bis 90 Vol.-% Wasserstoff verwendet wird. Ein bevorzugtes gasförmiges inertes Verdünnungsmittel, das diese Gasmischung in einer weiteren Ausführungsform der Erfindung enthält, ist Stickstoff.

Die Behandlung mit dem Schwefelwasserstoff-haltigen Gasgemisch, also die Sulfidierung, wird in einer Ausführungsform der Erfindung bei Temperaturen zwischen 250 und 370°C, insbesondere über eine Zeit von 0,5 bis 5 Stunden, durchgeführt, wobei die Temperatur während der Behandlungszeit in diesem Bereich vorzugsweise ansteigt. Die Behandlung mit dem Schwefelwasserstoff-haltigen Gasgemisch findet vorzugsweise bei Drücken von 0,5 bis 20 bar statt.

In einer weiteren Ausführungsform der Erfindung ist vorgesehen, die erfindungsgemäß sulfidierten Katalysatoren, das heißt, die nach der erfindungsgemäßen Behandlung mit dem Schwefelwasserstoff-haltigen Gasgemisch erhaltenen Katalysatoren, während des Kontaktbringens mit Sauerstoff bei Temperaturen von -20 bis 100°C, vorzugsweise von 40 bis 90°C, zu halten und/oder auf diese Temperaturen abzukühlen.

Nach der Sulfidierung und der Abkühlung der so erhaltenen Katalysatoren werden diese mit gasförmigem Sauerstoff, vorzugsweise bei Temperaturen zwischen 40 und 90°C, stabilisiert. Man verwendet für diesen Vorgang vorzugsweise Luft, das heißt den in Luft enthaltenen Sauerstoff, oder eine andere Sauerstoff-haltige Gasmischung. Die Sauerstoffkonzentration in der Sauerstoff-haltigen Gasmischung beträgt bei der Stabilisierung vorzugsweise 0,1 bis 21 Vol.-%; der verbleibende Rest besteht überwiegend aus Stickstoff.

Der Sauerstoff reagiert mit den Metallsulfiden an der Oberfläche der Metallsulfidkristallite und bildet eine passivierende Schicht, das heißt, die sulfidierten Katalysatoren werden stabilisiert. Infolgedessen ist der Zutritt weiteren Luftsauerstoffs verhindert. Die Reaktion ist abgeschlossen, wenn eine ausreichende Menge Sauerstoff aufgenommen ist, die die aktive Metallsulfidoberfläche bedeckt.

Der erfindungsgemäße Katalysator kann in dieser Form ohne Schwierigkeiten und gefahrlos gehandhabt werden. Bei der Lagerung, dem Transport und beim Einbau in den Reaktor kann der erfindungsgemäße Katalysator den üblichen Bedingungen ausgesetzt werden. Bei der Inbetriebnahme im Reaktor wird der absorbierte Sauerstoff durch einfache Temperaturerhöhung, zum Beispiel auf Temperaturen von 80 bis 200°C, durch Reaktion mit Wasserstoff wieder abgelöst. Das führt zu keiner Schädigung des Katalysators. Die Wärmeentwicklung bei diesem Vorgang ist gering und ergibt keinen exothermen Anstieg im Reaktor.

### Beispiel 1

Ein kommerzieller Katalysator A für Hydroraffinationszwecke in oxidischer Form mit folgender Zusammensetzung (in Masse-%, bezogen auf Trockenbasis) (Vorläuferkatalysator)

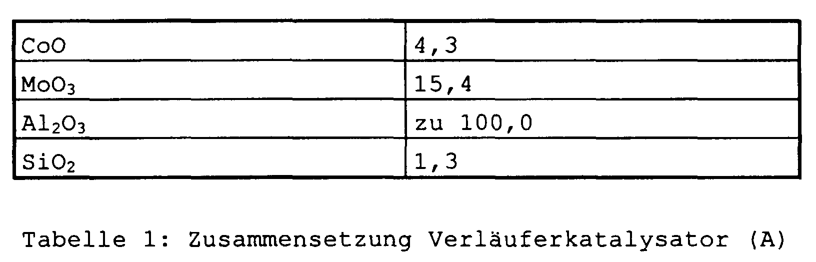

wird in Form von Extrudaten mit einem umschreibenden Durchmesser (Quadrulobe-Profil) von circa 1,7 mm in einem Wasserstoff-/Schwefelwasserstoffstrom und Stickstoff als Verdünnungsmittel sulfidiert.

In einem Strömungsrohr wurden 10 kg Katalysator A (Vorläuferkatalysator) mit einem Gasgemisch aus 34 Nm³/h N₂, 22 Nm³/h H₂ und 1,6 Nm³/h H₂S bei 370°C sulfidiert. Die Gasgeschwindigkeit betrug 1,2 m/s. Der so erhaltene Katalysator wurde unter inerten Bedingungen aus dem Strömungsrohr abgelassen und in einer Stickstoffatmosphäre aufbewahrt (Katalysator A₁).

Der Schwefelgehalt des Katalysators A₁ betrug 4,9 Masse-% bezogen auf Trockenbasis.

### Versuch a)

100 g des sulfidierten Katalysators A₁, der unter Stickstoff aufbewahrt wurde, wurde an der Luft auf einen Büchnertrichter geschüttet und Luft durch die Katalysatorschicht gezogen.

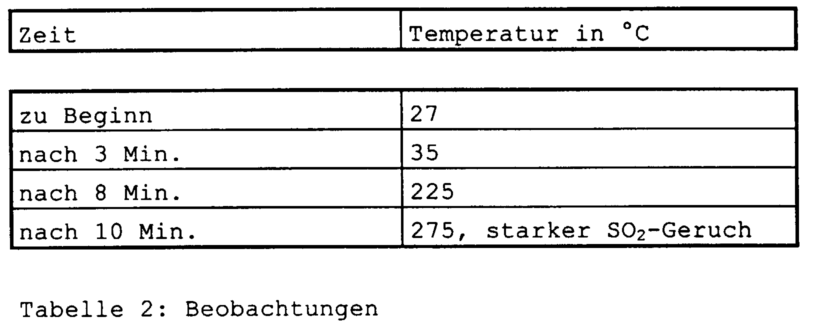

Nach 10 Minuten wurde der Versuch wegen starker SO₂-Entwicklung abgebrochen. Die Selbsterwärmung des Katalysators bei Luftdurchströmung war so stark, daß die Reaktion bis zur Bildung von Schwefeldioxid fortgeführt wurde.

### Versuch b)

100 g des sulfidierten Katalysators A₁, der unter Stickstoff aufbewahrt wurde, wurde an der Luft auf ein Sieb geschüttet und an der Luft bewegt, wobei die entstehende Wärme abgeführt wurde. Es trat eine kurzzeitige Erhöhung der Temperatur in der Katalysatorschicht von Umgebungstemperatur (25°C auf circa 60°C) ein. Danach kühlte sich der Katalysator von selbst ab. SO₂ wurde dabei nicht frei. Der Schwefel verblieb im Katalysator. Der Katalysator konnte anschließend an der Luft aufbewahrt werden, ohne daß eine Reaktion der Metallsulfide an der Luft auftrat. Der Katalysator war somit stabilisiert und konnte an der Luft bewegt und transportiert werden, ohne daß irgendeine Reaktion vor sich ging.

### Versuch c)

100 g des sulfidierten Katalysators A_{1,} der unter Stickstoff aufbewahrt wurde, wurde unter inerten Bedingungen in ein Strömungsrohr eingebaut und über den Katalysator ein Stickstoff-, Sauerstoffstrom geleitet (0,5 Vol.-% O₂). Dabei erhöhte sich die Temperatur von 25 auf 60°C in der Katalysatorschicht. Der Katalysator nahm eine Menge von 0,05 mol O₂ pro Grammatom Co + Mo auf (Katalysator A₂).

### Versuch d)

100 g des sulfidierten Katalysators A_{1,} der unter Stickstoff aufbewahrt wurde, wurde unter inerten Bedingungen in ein Strömungsrohr eingebaut und über den Katalysator ein Stickstoff-, Sauerstoffstrom geleitet (2,5 Vol.-% O₂). Dabei erhöhte sich die Temperatur von 25 auf 90°C in der Katalysatorschicht. Der Katalysator nahm eine Menge von 0,11 mol O₂ pro Grammatom Co + Mo auf (Katalysator A₃).

### Beispiel 2

### Prüfung der Katalysatoren

Die Katalysatoren A₁, A₂ und A₃ wurden vergleichend geprüft. Sie wurden vor der Berührung mit Luft mit einer solchen Menge des flüssigen hochsiedenden paraffinischen Kohlenwasserstoffs getränkt, daß die Poren für den Luftzutritt verschlossen waren. Die Katalysatorformlinge waren aber trotzdem noch rieselfähig. Die Katalysatoren wurden in einer Menge von 65 ml, verdünnt mit dem gleichen Volumen inertem Material, in einen Rohrreaktor eingebaut. Sie wurden ohne Zusatz eines Sulfidierungsmittels ab 150°C mit Gasöl in Betrieb genommen.

### Prüfbedingungen:

Die Katalysatoren wurden mit Gasöl beschickt.

| | |
|---|---|
| Druck: | 40 bar (Rein-H₂) |
| LHSV: | 2 h⁻¹ |
| Gas: | Öl-Verhältnis 150 Nl/l |
| Temperaturen: | 310, 330, 350, 370°C |
| Rieselverfahren | |
| Gerader Durchgang | |

### Eigenschaften des Gasöls:

| | |
|---|---|
| D₂₀: | 0,883 |
| Siedebereich: | 240 bis 390°C |
| Schwefelgehalt: | 1,185 Masse-% |
| Basischer Stickstoff: | 163 mg NH₃/l |

Im Raffinat wurde der Schwefelgehalt ermittelt.

Zum Vergleich wurde der oxidische Katalysator A in situ sulfidiert. Nach dem Einbau des oxidischen Katalysators in den Reaktor wurde die Reaktortemperatur mit 20 K/h auf 150°C gesteigert bei einer Wasserstoff-Strömungsgeschwindigkeit von 100 Liter/h. Dann wurden 150 ml Dieselölfraktion pro Stunde mit 2,0 Masse-% Sulfidierung mit Dioctylpentasulfid (DOPS) zugeführt und der Reaktor nach folgendem Regime aufgeheizt:
bei 150°C 1 h
bei 200°C 4 h
bei 220°C 8 h
bei 240°C 4 h
bei 260°C 4 h
bei 280°C 4 h
bei 300°C 4 h
bei 350°C 4 h

Nach der in-situ-Schwefelung wurde Katalysator A₀ erhalten, die Temperatur auf 310°C abgesenkt und mit der Zugabe von Straight-run-Gasöl begonnen.

Die Reaktionsprodukte wurden gesammelt und analysiert. Die Ergebnisse für die Entschwefelung wurden nach einer Kinetik 1,5. Ordnung (vgl. W.M. Keely, P. Jerus, E.K. Dienes, A.L. Hausberger, 8^{th} International Congres on Catalysis, Berlin [West], 2-6 July 1984, Proceedings Vol. IV, p. 403-414, Verlag Chemie) ausgewertet. Es ergaben sich folgende Reaktionsgeschwindigkeitskonstanten für die Hydroentschwefelung des Gasöls bei 350°C:

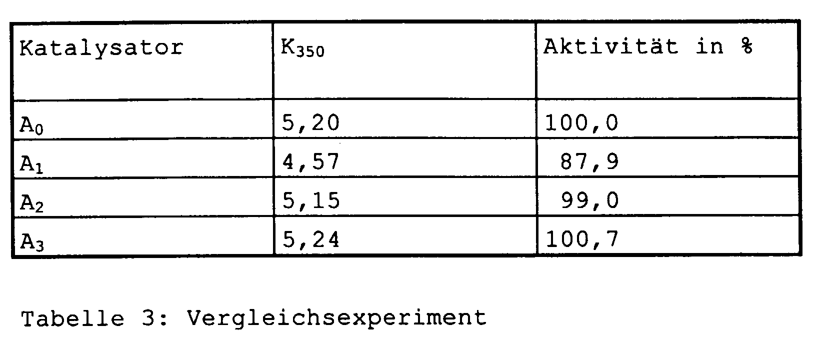

Während der ohne Sauerstoffberührung ex situ geschwefelte Katalysator A, weniger aktiv ist als der in situ geschwefelte Katalysator A₀, haben die erfindungsgemäß hergestellten und an der Luft stabilen Katalysatoren A₂ und A₃ etwa die gleiche Aktivität wie der in situ geschwefelte Katalysator A₀.

### Beispiel 3

Ein kommerzieller Katalysator B (Vorläuferkatalysator) in oxidischer Form für Hydroraffinationszwecke mit folgender Zusammensetzung (in Masse-%, bezogen auf Trockenbasis)

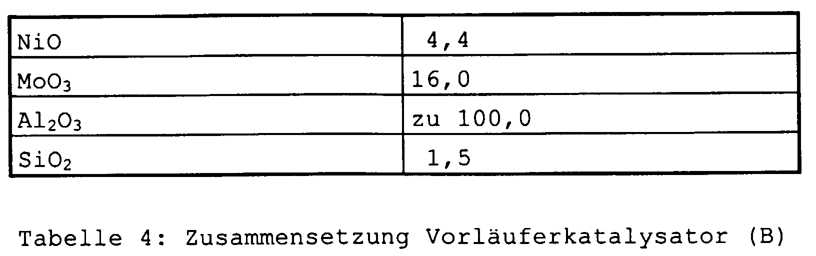

wird in Form von Extrudaten mit 1,5 mm Durchmesser in einem Strömungsrohr mit einem Wasserstoff/Schwefelwasserstoff-Gemisch (10 Vol.-% H₂S) bei Temperaturen von 250 bis 370°C sulfidiert. Der Katalysator wurde in inerter Atmosphäre auf Umgebungstemperatur abgekühlt. Ein Teil davon wurde sofort in Dieselöl abgelassen (Katalysator B₁).

Ein zweiter Teil wurde mit 5 Vol.-% Sauerstoff enthaltendem Stickstoff in Berührung gebracht. Dabei erhitzte sich das Katalysatorbett kurzzeitig auf 100°C. Der Katalysator wurde dann sofort wieder auf Umgebungstemperatur abgekühlt (Katalysator B₂). Die aufgenommene Menge an Sauerstoff betrug 0,20 mol pro Grammatom Ni + Mo.

Der Schwefelgehalt betrug in beiden Fällen (B1 und B2) nach Analyse 6,5 Masse-% (bezogen auf Trockenbasis). Der Katalysator B₂ war an der Luft stabil und zeigt keine Selbsterhitzungseigenschaften, wenn er von Luft durchströmt wurde.

### Beispiel 4

Zum Vergleich wurde der oxidische Katalysator B nach dem gleichen Regime wie in Beispiel 2 in situ sulfidiert:

Nach dem Einbau des oxidischen Katalysators B in den Reaktor wurde die Reaktortemperatur mit 20 K/h auf 150°C gesteigert bei einer Wasserstoff-Strömungsgeschwindigkeit von 100 Liter/h. Dann wurden 150 ml Dieselölfraktion pro Stunde mit 2,0 Masse-% Sulfidierung mit Dioctylpentasulfid (DOPS) zugeführt und der Reaktor nach folgendem Regime aufgeheizt:
bei 150°C 1 h
bei 200°C 4 h
bei 220°C 8 h
bei 240°C 4 h
bei 260°C 4 h
bei 280°C 4 h
bei 300°C 4 h
bei 350°C 4 h

Nach der in-situ-Schwefelung wurde Katalysator B₀ erhalten, die Temperatur auf 310°C abgesenkt und mit der Zugabe von Straight-run-Gasöl begonnen.

Die Katalysatoren B₁, B₂ und B₃ wurden vergleichend geprüft. Sie wurden vor dem Einbau an der Luft mit einer solchen Menge Dieselöl getränkt, daß sie noch rieselfähig waren. Die Katalysatoren wurden in einer Menge von 65 ml, verdünnt mit dem gleichen Volumen inertem Material, in einen Rohrreaktor eingebaut. Sie wurden ohne Zusatz eines Sulfidierungsmittels ab 150°C mit Gasöl in Betrieb genommen.

### Prüfbedingungen:

Die Katalysatoren wurden mit Gasöl beschickt.

| | |
|---|---|
| Druck: | 40 bar (Rein-H₂) |
| LHSV: | 2 h⁻¹ |
| Gas: | Öl-Verhältnis 150 Nil/l |
| Temperaturen: | 310, 330, 350, 370°C |
| Rieselverfahren | |
| Gerader Durchgang | |

### Eigenschaften des Gasöls:

| | |
|---|---|
| D₂₀: | 0,883 |
| Siedebereich: | 240 bis 390°C |
| Schefelgehalt: | 1,185 Masse-% |
| Basischer Stickstoff: | 163 mg NH₃/l |

Die Reaktionsprodukte wurden gesammelt und analysiert. Die Ergebnisse für die Entschwefelung wurden nach einer Kinetik 1,5. Ordnung (vgl. W.M. Keely, P. Jerus, E.K. Dienes, A.L. Hausberger, 8^{th} International Congres on Catalysis, Berlin [West], 2-6 July 1984, Proceedings Vol. IV, p. 403-414, Verlag Chemie) ausgewertet. Es ergaben sich folgende Reaktionsgeschwindigkeitskonstanten für die Hydroentschwefelung des Gasöls bei 350°C:

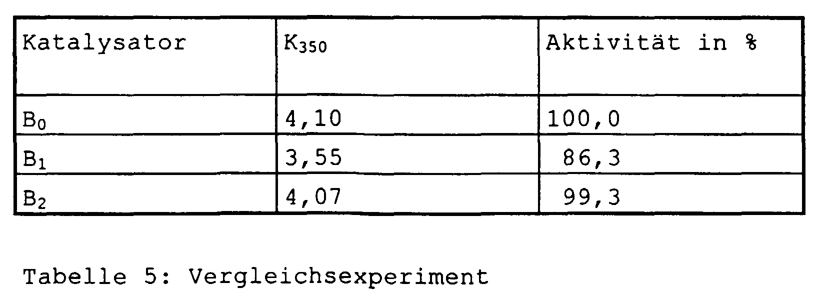

Während der ohne Sauerstoffberührung ex situ geschwefelte Katalysator B₁ weniger aktiv ist als der in situ geschwefelte Katalysator B₀, hat der erfindungsgemäß hergestellte und an der Luft stabile Katalysator B₂ etwa die gleiche Aktivität wie der in situ geschwefelte Katalysator B₀.

## Patentansprüche

1. Stabilisierter und sulfidierter Katalysator, enthaltend ein oder mehrere Sulfide eines oder mehrerer Metalle der Nebengruppe VI und/oder VIII des Periodensystems und gegebenenfalls einen Träger, **dadurch gekennzeichnet**, daß der Katalysator einen Sauerstoff-Gehalt von 0,05 bis 0,20 mol pro Grammatom Metall der Nebengruppe VI und/oder VIII des Periodensystems aufweist.

2. Katalysator nach Anspruch 1, wobei der Sauerstoff in absorbierter Form auf dem oder den Sulfiden der Metalle der Nebengruppe VI und/oder VIII vorliegt.

3. Katalysator nach einem der vorhergehenden Ansprüche, wobei das oder die Metalle der Nebengruppe VI und/oder VIII ausgewählt sind aus der Gruppe bestehend aus Molybdän, Nickel oder Kobalt.

4. Katalysator nach einem der vorhergehenden Ansprüche, wobei der Träger ein poröser Träger ist.

5. Katalysator nach einem der vorhergehenden Ansprüche, wobei der Träger Al₂O₃, Kieselgur, TiO₂, Ton, Zeolith, ZrO₂, Silikat oder SiO₂ enthält.

6. Verfahren zur Herstellung eines stabilisierten und sulfidierten Katalysators, wobei
a) ein Vorläuferkatalysator, vorzugsweise ein oxidischer Vorläuferkatalysator, enthaltend ein oder mehrere Metalle der Nebengruppe VI und/oder VIII des Periodensystems, vorzugsweise auf einem Träger, bei erhöhten Temperaturen mit einem Schwefelwasserstoff-haltigen Gasgemisch behandelt wird,
b) der erhaltene Katalysator in einer nicht reaktiven Atmosphäre unter unmittelbarer Abführung der sich entwickelnden Absorptionswärme mit einem Sauerstoff-haltigen Gasgemisch in Kontakt gebracht wird und der Katalysator 0,05 bis 0,20 mol O₂ pro Grammatom des oder der Metalle der Gruppe VI und/oder VIII des Periodensystems absorbiert.

7. Verfahren nach Anspruch 6, wobei die erhöhten Temperaturen 150 bis 400°C betragen.

8. Verfahren nach einem der Ansprüche 6 oder 7, wobei die Behandlung mit dem Schwefelwasserstoff-haltigen Gasgemisch bei Drücken von 0,5 bis 20 bar stattfindet.

9. Verfahren nach einem der Ansprüche 6 bis 8, wobei die Sauerstoffabsorption bei Temperaturen von -20 bis 120°C, insbesondere 40 bis 90°C, stattfindet.

10. Verfahren nach einem der Ansprüche 6 bis 9, wobei die Behandlung mit dem Schwefelwasserstoff-haltigen Gasgemisch mit Wasserstoff und Schwefelwasserstoff, vorzugsweise verdünnt mit Stickstoff als inertem Transportmittel, durchgeführt wird.

11. Verfahren nach einem der Ansprüche 6 bis 10, **dadurch gekennzeichnet**, daß der Schwefelwasserstoffgehalt in der Schwefelwasserstoff-haltigen Gasmischung 0,1 bis 20 Vol.-% und der Wasserstoffgehalt 1 bis 90 Vol.-% beträgt.

12. Verfahren nach einem der Ansprüche 6 bis 11, **dadurch gekennzeichnet**, daß die Behandlung mit dem Schwefelwasserstoff-haltigen Gasgemisch bei Temperaturen zwischen 250 und 370°C, vorzugsweise über eine Zeit von 0,5 bis 5 Stunden, mit ansteigender Temperatur durchgeführt wird.

13. Verfahren nach einem der Ansprüche 6 bis 12, **dadurch gekennzeichnet**, daß der Sauerstoff aus der Luft entnommen wird.

14. Verfahren nach einem der Ansprüche 6 bis 13, **dadurch gekennzeichnet**, daß die Sauerstoffkonzentration in der Sauerstoff-haltigen Gasmischung 0,1 bis 21 Vol.-% beträgt und der verbleibende Anteil hauptsächlich Stickstoff ist.

15. Stabilisierter und sulfidierter Katalysator, hergestellt mittels eines der Verfahren gemäß der Ansprüche 6 bis 14.

16. Verwendung eines stabilisierten und sulfidierten Katalysators nach einem der Ansprüche 1 bis 5 oder 15 als Hydrier-, Hydroraffinations- und Hydrocrackkatalysator.
